Europäisches Patentamt

European Patent Office

Office européen des brevets

(11) Publication number: **0 239 101 B1**

# EUROPEAN PATENT SPECIFICATION

(45) Date of publication of patent specification: **03.06.92**    (51) Int. Cl.⁵: **B29D  30/54**, B29C 35/02

(21) Application number: **87104435.0**

(22) Date of filing: **25.03.87**

(54) **Tire retreading reinforced envelope and method for the manufacture thereof.**

(30) Priority: **27.03.86 YU 481/86**

(43) Date of publication of application:
**30.09.87 Bulletin  87/40**

(45) Publication of the grant of the patent:
**03.06.92 Bulletin  92/23**

(84) Designated Contracting States:
**AT BE DE FR GB IT**

(56) References cited:
| | |
|---|---|
| DE-A- 1 934 767 | DE-A- 2 044 730 |
| FR-A- 1 411 387 | FR-A- 2 152 727 |
| FR-A- 2 197 719 | FR-A- 2 261 887 |
| NL-A- 7 304 342 | US-A- 3 884 740 |
| US-A- 4 309 234 | |

(73) Proprietor: **SAVA KRANJ industrija gumijevih, usnjenih in kemicnih izdelkov n. o. sol. o. Skofjeloska 6
YU-64000 Kranj(YU)**

(72) Inventor: **Munih, Pavel, Dr.-Ing.
Bavdkova 28
YU-64000 Kranj(YU)**
Inventor: **Kraljevic-Trobec, Ljubica, Dipl.-Ing.
Celovska 185
YU-61000 Ljubljana(YU)**
Inventor: **Peklaj, Martina, Dipl.-Ing.
Koroska 10
YU-64000 Kranj(YU)**

(74) Representative: **Kador & Partner
Corneliusstrasse 15
W-8000 München 5(DE)**

## Description

### Technical Field

The present invention relates to a novel tire retreading reinforced envelope composed of a heat resistant textile and a heat resistant rubber blend and to the method for the manufacture thereof.

### Background Art

The basic technologies of cold retreading or recapping of tires are disclosed in U.S. patents 2,976,910, 3,136,673 and 4,075,047. The envelopes are presented therein as flexible airtight covers, which serve for the exit of air between them and the tire. U.S. patent 4,309,234 describes the embodiment of an envelope having annular lips on its outer surface defining third seal faces inclined to the outer surface of said envelope.

The Applicants' own Yugoslavian patent P 42,052, refers to a method for the manufacture of envelopes by means of a one-step curing of the assembled elements by means of a therebetween separating layer and, additionally thereto, an envelope comprising an inserted preformed annular element made of elastic textile is known. Even this latter method, however, although improved with respect to the afore-cited ones, was not suitable for practical work because the elastic textile stretched during the curing; especially in the continuous performance there occurred slipping between the textile and the rubber, which resulted in the creasing of the material. At the bonding of the materials, achieved e.g. by sewing or sealing, there were weak points where a rupture might have occurred.

Therefore there has been a long-felt need for tire retreading envelopes of improved wear-resistance and long-lasting unaltered characteristics and easy handling in the tire retreading operations; further there has been a need for a technically advantageous and economical method for the manufacture thereof.

### Summary of the Invention

In accordance with the present invention there is provided a novel tire retreading envelope comprising two identical textile reinforced rubber annular elements, facing each other and joined in an annular seal adjacent to the outer diameter thereof and, optionally, each presenting an annular rubber sealing face at the inner diameters on the inner surfaces thereof.

Another object of the present invention is the providing of an improved method for the manufacture of the novel envelope by assembling the constructional elements, i.e. the rubber discs and the textile annular elements, and exposing them to heat and pressure curing in order to provide the requested sealing between these elements yielding the envelope. The annular textile reinforcing elements may be covered on both sides with rubber discs and in this case the sealing may be achieved by the sole exertion of pressure on the superimposed rubber seal faces and by separating the superimposed rubber surfaces intended as effective inner working faces of the envelope by means of a separating disc during the curing. The sealing may also be achieved by the presence of additional annular rubber elements in the case when two textile surfaces of the reinforcements face each other or when the bond resulting from the curing of two compressed surfaces of the rubber discs is found to be insufficient and ought to be improved. The bonding of the annular textile reinforcing elements with the corresponding disc on one or both sides may be perfomed by pre-curing and two of these semiproducts joined by sealing rings and pressure curing or all constructional elements may be assembled and cured simultaneously.

An even more advantageous embodiment of the present invention provides a continuous performance of the process, starting from the reinforcement textile fabric with pre-cut circular apertures and the rubber blend in the form of sheets, by superimposing them and optionally bonding the textile on one or both faces with the rubber. Two such assembled or bonded intermediate products are superimposed, taking care that the circular apertures of the textile are exactly superimposed and that the textile surfaces face each other when only a single face of the textile fabric has been covered with the rubber sheet. As stated above, the requested selective sealing at the specific surfaces is achieved by the insertion of sealing rubber annular elements and the separating discs. After the performed curing, which can also be carried out simultaneously or step-wise, the sheet-form material is cut into the desired shape of envelopes.

### Brief Description of Drawings

The present invention is explained in the following detailed description and illustrated by the following drawings, in which

Figs. 1A-3A    show various embodiments of the assembled starting elements before the final curing; right in section, left in elevation;

Figs. 1B-3B    show the corresponding embodiments of the final envelopes; right in section, left in elevation.

### Detailed Description

With reference to the drawings wherein the same reference numerals designate the same or corresponding parts, there are described the various embodiments of the invention.

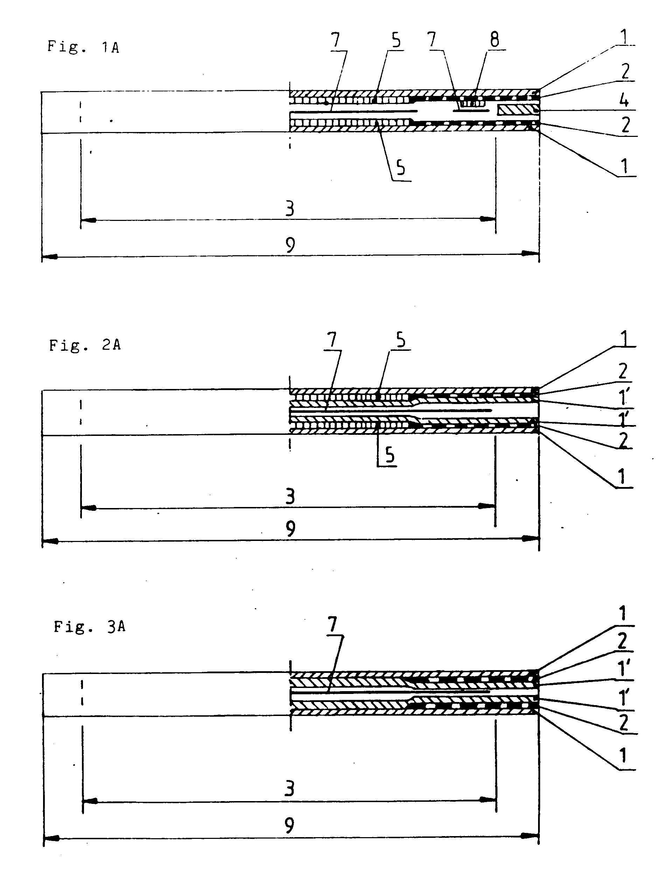

Fig. 1A represents an embodiment of the assembly before curing and comprises two superimposed discs (1, 1) of a rubber blend on the basis of a heat-resistant elastomer, two superimposed annular reinforcing elements (2, 2) made of heat-resistant textile and inserted between the rubber discs (1, 1) and separated by means of an annular sealing rubber element (4) at the periphery thereof. Between the inner faces of the rubber discs (1, 1) there are inserted, at the central area thereof, two superimposed rubber discs (5, 5) extending in a rim over the surface of the annular reinforcing textile elements and separated by means of a separating disc (7) made of a separating foil or textile. Near the periphery on the inner, uncovered surface of one of the annular reinforcing textile elements (2) there is provided a rubber disc (8) for the subsequent sealing of the valve in the envelope. This rubber disc (8) is covered with a slightly larger disc made of separating foil or textile and is positioned near the inner effective diameter (3) of the final envelope, yet not in contact with the annular rubber element (4). The numeral 9 in Fig. 1A designates the outer diameter of the final envelope.

Fig.2A represents another embodiment of the assembly before the curing. It comprises two identical superimposed halves facing each other and comprising two rubber discs (1, 1') separated at the periphery by said annular reinforcing textile element (2) and at the central part by said rubber disc (5), wherein the diameter of the rubber disc (5) slightly exceeds the inner diameter of the annular element (2).

Said superimposed halves of the assembly are separated by the insertion of a separating disc (7), whose diameter corresponds to the effective diameter (3) of the final envelope.

Fig. 3A represents the simplest embodiment of the assembly before curing. It comprises two identical superimposed halves, facing each other, separated by a separating disc (7) of a diameter corresponding to the effective diameter (3) of the final envelope, and comprising two rubber discs (1, 1'), separated at their periphery by said annular reinforcing textile element (2).

Figs. 1B-3B show the corresponding envelopes obtained after the curing and shaping from the assemblies shown in Figs. 1A-3A.

As evident from these drawings, the curing results in the bonding of the rubber and the reinforcing textile and in the providing of a sealing area between the effective diameter and the outer diameter of the final envelope. This seal is achieved either by means of the inserted annular rubber element (4) or by the contacting of the exposed annular rubber surfaces of the elements 1', 1' themselves. The numeral (6) designates the inner diameter of the final envelopes in Figs. 1B-3B.

A very advantageous embodiment of the present invention is further a continuous performance of the present improved method for the manufacture of tire retreading envelopes wherein

- heat-resistant reinforcing textile fabric of 10 to 500 $g/m^2$ and of a stretching of max. 500 % in any direction, preferably an elastic textile fabric of a stretching of 50 to 300 % in any direction, whose width corresponds to the outer diameter of the envelope or slightly exceeds it and which has circular apertures, whose diameters are not smaller that the inner diameter of the envelope and not larger than the difference between the effective diameter of the envelope and the half-width of the road-contacting surface of the tire being retreaded, said apertures being spaced along the central line of the textile fabric at distances exceeding the outer diameter of the envelope for up to 200 mm,
- is covered or layered on one or both faces with a sheet of a rubber blend on the basis of a heat-resistant elastomer of a thickness of 0.1 to 5 mm and of equal width as said textile fabric;
- whereupon this assembly - turned with the textile face upowards when said reinforcing textile is layered with the rubber only on one side - is covered
- optionally with elements for the providing of annular sealing faces in the envelope in the form of rubber discs (5) of equal composition and thickness as said rubber sheet, which are concentric with said circular apertures of the textile fabric and extend over them in an annular rim of min. 10 mm, and
- further, optionally, with annular elements (4) for the providing of the annular seal at the periphery of the envelope, of equal composition and thickness as said rubber sheet, which are concentric with said circular apertures of the textile fabric and whose inner diameters are equal to the effective diameter (3) of the envelope and their outer diameters are equal to the outer diameter (9) of the envelope,
- whereupon at a distance of min. 5 mm inwards from the effective diamter (3) of the envelope on the textile fabric there is provided a disc (8) of a diameter of about 40 mm, made of a rubber blend of equal composition as said rubber sheet for the subsequent sealing of the valve of the envelope,

- and finally the thus obtained assembly is covered over all its rubber surfaces except the annular area between the effective and the outer diameter of the envelope by discs (7) and optionally (7'), made of separating foil or textile, and subsequently this assembly is superimposed with its mirror-assembly, except the separating discs (7, 7'), the rubber discs (8) and the annular rubber elements (4), and exposed to a curing operation, whereupon the material is shaped to the desired dimensions of the envelopes.

As heat-resistant rubber there is preferably used a chloro or bromo butyl rubber based blend.

The textile fabric may be an elastic fabric, e.g. texturated polyamide such as Polyamide 6.6 or texturated polyester.

The intermediate product may be cured in various ways; a most advantageous embodiment is the curing in a continuous curing apparatus with heating on both sides, as described in Examples 1-3. The curing of the complete assembly is either performed simultaneously or step-wise. It is evident, however, that various modifications are possible within the scope of the invention.

The present invention is illustrated by the following working Examples of various embodiments, which should not be construed as limitative in any way.

Example 1

On a three-roll calender a chloro butyl rubber blend was drawn into a sheet of a width of 1400 mm and a thickness of 1.2 mm and covered in a twin-roller with an elastic textile fabric (Helanca®) of a longitudinal stretching of 160 % and a transverse stretching of 430 % with a width of 1350 mm and with pre-cut circular apertures of a diameter of 800 mm along its longitudinal central line. The textile face of the obtained assembly was provided with a disc, made of the equal rubber material as said rubber sheet, with a diameter of 900 mm and a thickness of 1.2 mm, and with an annular element of an inner diameter of 1200 mm, a width of 30 mm and a thickness of 1 mm, made of the equal rubber material as said rubber sheet, and with a rubber disc of a diameter of 40 mm providing the sealing of the valve of the envelope, the centre thereof being 30 mm from the effective diameter of the envelope.

The rubber discs were covered with concentric discs, which extended for at least 10 mm over their rims and were made of polyester fabric, siliconized on both faces. This assembly was superimposed with its mirror-assembly, which, however, lacked the separating discs, the annular sealing element and the rubber disc intended for providing the sealing of the valve. The thus obtained assembly was cured between two runners made of siliconized polyester fabric at a temperature of 44o K, at a rate of 6 m/h and a pressure of 4 bar. From the cured product there were finally cut the envelopes according to Fig 1B, having an outer diameter of 1260 mm and an inner diameter of 450 mm.

Before the insertion of the valve, a circular aperture of a diameter of 12 mm was cut into the area that was covered on its inner face by said rubber disc (8) as shown in Fig. 1B, intended for the providing of the sealing of the valve.

Example 2

This Example was performed in an analogous manner as Example 1, except that the reinforcing textile was covered on both faces with said rubber sheet and the annular rubber element for providing the sealing engagement between the outer diameter and the intended effective diameter of the envelope was omitted. The rubber disc for the provision of the sealing of the valve of the envelope was omitted as well. The separating disc had a diameter of 1200 mm and extended in fact to the intended effective diameter of the envelope.

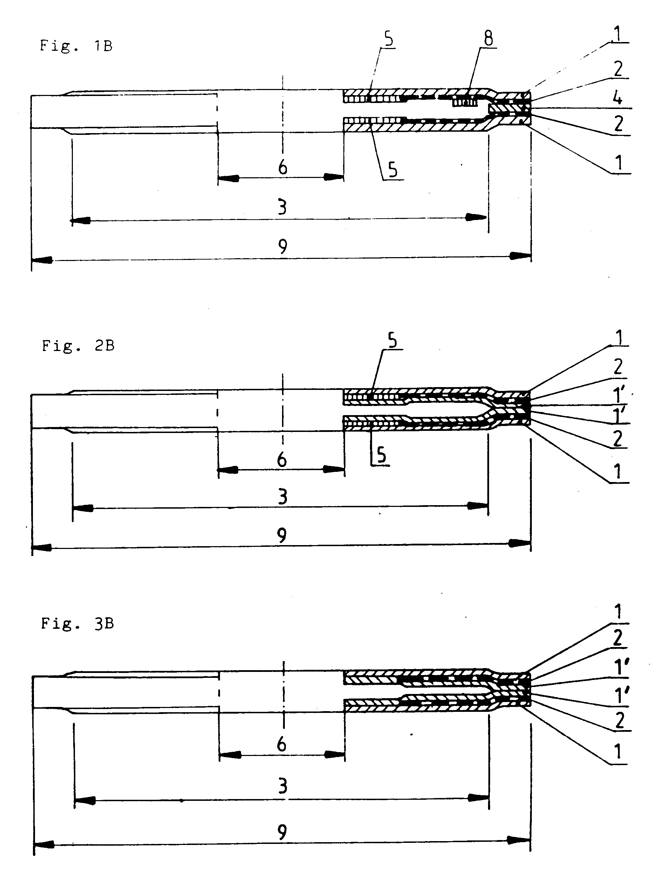

The assembly was cured and finished as in Example 1. The envelope corresponded to Fig. 2B.

Example 3

This Example was performed in an analogous manner as Example 2 except that even the central rubber discs covering the circular apertures of the textile fabric were omitted. The final envelope corresponded to Fig. 3B.

Example 4

The assemblies obtained in accordance with any of the above Examples were cured in a single- or multiplaten press for 20 minutes at a temperature of 440 K and a pressure of 10 bar, and the material was finished into the desired shape of the envelopes.

The envelopes obtained in any of the above embodiments of the present inventive proces excelled in comparison with the prior art embodiments by their extreme wear resistance as they did not show any damages even after 100 uses, whereas the average durability of the prior art envelopes is about 50 uses in retreading; the latter show the greatest number of ruptures at the working area covering the road-contacting surface of the tire.

The present inventive envelopes are thinner than the prior art ones and they provide for easy handling when positioned on the tire.

4

**Claims**

1. An improved tire retreading reinforced envelope, comprising two identical superimposed identical textile reinforced rubber annular elements, facing each other and joined in an annular seal adjacent to the outer diameter thereof and optionally presenting each an annular rubber sealing face at the inner diameters on the inner surfaces thereof.

2. An envelope as claimed in claim 1, comprising two annular rubber elements (1, 1), two annular reinforcing textile elements (2, 2), an annular rubber sealing element (4) at the outer diameter of the envelope, annular rubber sealing face (5) at each inner diameter of the envelope and a rubber disc (8) for providing the sealing of the valve in the envelope.

3. An envelope as claimed in claim 1, comprising two annular rubber elements (1, 1), two annular reinforcing textile elements (2, 2), an annular rubber sealing face (5) at each inner diameter of the envelope and an annular seal, provided between the effective diameter (3) and the outer diameter (9) of the envelope by the inner annular rubber elements (1', 1') themselves.

4. An envelope as claimed in claim 1, comprising two annular rubber elements (1, 1), two annular reinforcing textile elements (2, 2) and an annular seal, provided between the effective diameter (3) and the outer diameter (9) of the envelope by the inner annular rubber elements (1', 1') themselves.

5. A method for the manufacture of an improved tire retreading reinforced envelope, wherein
   - heat-resistant reinforcing textile fabric of 10 to 500 $g/m^2$ and of a stretching of max. 500 % in any direction, preferably an elastic textile fabric of a stretching of 50 to 300 % in any direction, whose width corresponds to the outer diameter of the envelope or slightly exceeds it and which has circular apertures, whose diameters are not smaller that the inner diameter of the envelope and not larger than the difference between the effective diameter of the envelope and the half-width of the road-contacting surface of the tire being retreaded, said apertures being spaced along the central line of the textile fabric at distances exceeding the outer diameter of the envelope for up to 200 mm,
   - is covered or layered on one or both faces with a sheet of a rubber blend on the basis of a heat-resistant elastomer of a thickness of 0.1 to 5 mm and of equal width as said textile fabric;
   - whereupon this assembly - turned with the textile face upowards when said reinforcing textile is layered with the rubber only on one side - is covered
   - optionally with elements for the providing of annular sealing faces in the envelope in the form of rubber discs (5) of equal composition and thickness as said rubber sheet, which are concentric with said circular apertures of the textile fabric and extend over them in an annular rim of min. 10 mm, and
   - further, optionally, with annular elements (4) for the providing of the annular seal at the periphery of the envelope, of equal composition and thickness as said rubber sheet, which are concentric with said circular apertures of the textile fabric and whose inner diameters are equal to the effective diameter (3) of the envelope and their outer diameters are equal to the outer diameter (9) of the envelope,
   - whereupon at a distance of min. 5 mm inwards from the effective diameter (3) of the envelope on the textile fabric there is provided a disc (8) of a diameter of about 40 mm, made of a rubber blend of equal composition as said rubber sheet for the subsequent sealing of the valve of the envelope,
   - and finally the thus obtained assembly is covered over all its rubber surfaces except the annular area between the effective and the outer diameter of the envelope by discs (7) and optionally (7'), made of separating foil or textile, and subsequently this assembly is superimposed with its mirror-assembly, except the separating discs (7, 7'), the rubber discs (8) and the annular rubber elements (4), and exposed to a curing operation, whereupon the material is shaped to the desired dimensions of the envelopes.

6. A method as claimed in claim 5, wherein the steps are performed in a continuous manner.

**Revendications**

1. Enveloppe renforcée rechapée perfectionnée pour pneumatique, comprenant deux éléments annulaires en caoutchouc renforcé par du textile identiques et superposés, en regard l'un de l'autre et reliés dans un élément de scellement étanche annulaire contigu à son diamètre extérieur et présentant chacun en variante une face de scellement étanche annulaire en caoutchouc au niveau des diamètres intérieurs sur leurs surfaces intérieures.

2. Enveloppe selon la revendication 1, comprenant deux éléments annulaires en caoutchouc (1, 1), deux éléments annulaires en textile renforcé (2, 2), un élément de scellement étanche annulaire en caoutchouc (4) sur le diamètre extérieur de l'enveloppe, une face de scellement étanche annulaire en caoutchouc (5) sur chaque diamètre intérieur de l'enveloppe et un disque en caoutchouc (8) pour assurer le scellement étanche de la valve dans l'enveloppe.

3. Enveloppe selon la revendication 1, comprenant deux éléments annulaires en caoutchouc (1, 1), deux éléments annulaires en textile de renforcement (2, 2), une face de scellement étanche annulaire en caoutchouc (5) sur chaque diamètre intérieur de l'enveloppe et un élément de scellement étanche annulaire, disposé entre le diamètre réel (3) et le diamètre extérieur (9) de l'enveloppe par les éléments annulaires intérieurs en caoutchouc eux-mêmes (1', 1').

4. Enveloppe selon la revendication 1, comprenant deux éléments annulaires en caoutchouc (1, 1), deux éléments annulaires en textile de renforcement (2, 2) et un élément de scellement étanche annulaire, disposés entre le diamètre réel (3) et le diamètre extérieur (9) de l'enveloppe par les éléments annulaires en caoutchouc (1', 1') eux-mêmes.

5. Procédé pour la fabrication de l'enveloppe renforcée rechapée perfectionnée pour pneumatique, dans lequel
   - un tissu en textile de renforcement résistant à la chaleur de 10 à 500 g/m² et d'un allongement de maximum 500 % dans n'importe quelle direction, de préférence un tissu textile élastique d'un allongement de 50 à 300 % dans n'importe quelle direction dont la largeur correspond au diamètre extérieur de l'enveloppe ou le dépasse légèrement et qui présente des ouvertures circulaires dont les diamètres ne sont pas inférieurs au diamètre intérieur de l'enveloppe et qui ne sont pas supérieurs à la différence entre le diamètre réel de l'enveloppe et la demi-largeur de la surface de contact avec la route du pneumatique rechapé, les ouvertures étant espacées le long de la ligne centrale du tissu textile à des distances dépassant le diamètre extérieur de l'enveloppe jusqu'à 200 mm,
   - est revêtu ou comporte une couche sur une ou sur les deux faces d'une feuille d'un mélange en caoutchouc à base d'un élastomère résistant à la chaleur d'une épaisseur de 0,1 à 5 mm et d'une largeur égale au tissu textile ;
   - après quoi cet ensemble - retourné avec la face textile vers le haut lorsque le textile de renforcement est appliqué avec le caoutchouc sur un seul côté - est revêtu - facultativement des éléments destinés à assurer les faces de scellement étanche annulaires dans l'enveloppe sous forme de disque de caoutchouc (5) de composition et d'épaisseur égales à la feuille de caoutchouc et qui sont concentriques par rapport aux ouvertures circulaires du tissu textile et s'étendent sur celles-ci sous forme d'une jante annulaire de 10 mm minimum, et
   - ensuite, facultativement, il est revêtu d'éléments annulaires (4) destinés à fournir l'élément de scellement étanche annulaire à la périphérie de l'enveloppe, de composition et d'épaisseur égales à la feuille en caoutchouc et qui sont concentriques avec les ouvertures circulaires du tissu textile et dont les diamètres intérieurs sont égaux au diamètre réel (3) de l'enveloppe et leurs diamètres extérieurs sont égaux au diamètre extérieur (9) de l'enveloppe,
   - après quoi, une distance de 5 mm minimum vers l'intérieur en partant du diamètre réel (3) de l'enveloppe sur le tissu textile, il est prévu un disque (8) d'un diamètre d'environ de 40 mm réalisé en un mélange de caoutchouc de composition égale à la feuille de caoutchouc pour le scellement étanche ultérieur de la valve de l'enveloppe,
   - et enfin on recouvre l'ensemble ainsi obtenu sur toutes ses surfaces en caoutchouc, sauf dans la zone annulaire entre le diamètre réel et le diamètre extérieur de l'enveloppe, de disques (7) et en variante de disques (7') réalisés à partir d'une feuille de séparation ou de textile et subséquemment, on superpose à cet ensemble son ensemble spéculaire sauf les disques de séparation (7, 7'), les disques en caoutchouc et les éléments en caoutchouc annulaires (4), et on les soumet à une opération de durcissement, après quoi le matériau est formé aux dimensions souhaitées des enveloppes.

6. Procédé selon la revendication 5, dans lequel les étapes sont effectuées d'une manière continue.

**Patentansprüche**

1. Verbesserte Enveloppe für die Runderneuerung von Reifenlaufflächen, dadurch gekennzeichnet, daß sie zwei identische, textilverstärkte, ringförmige, sich gegenüber befindliche Kautschukelemente, welche anliegend an deren Außendurchmesser ringförmig verbunden sind und gegebenenfalls jedes ein ringförmige Gummidichtungsfläche an den inneren Duchmessern der Innenflächen aufweisen.

2. Enveloppe nach Anspruch 1, dadurch gekennzeichnet, daß sie zwei ringförmige Gummielemente (1,1), zwei übereinander angeordnete, ringförmige, verstärkende Elemente (2, 2) aus Textil, ein ringförmiges Gummidichtungselement (4) am Außendurchmesser der Enveloppe, eine ringförmige Gummidichtungsfläche (5) an jedem Innendurchmesser der Enveloppe und eine Kautschukrundscheibe (8) zur Gewährleistung der Bindung des Ventils mit der Enveloppe, aufweist.

3. Enveloppe nach Anspruch 1, dadurch gekennzeichnet, daß sie zwei ringförmige Kautschukelemente (1,1), zwei ringförmige, verstärkende Elemente (2, 2) aus Textil, eine ringförmige Kautschukdichtungsfläche (5) an jedem Innendurchmesser der Enveloppe und ein ringförmiger Verbund zwischen dem effektiven Durchmesser (3) ind dem Aussendurchmesser (9) der Enveloppe, gestaltet durch die inneren ringförmigen Kautschukelemente (1',1'), aufweist.

4. Enveloppe nach Anspruch 1, dadurch gekennzeichnet, daß sie zwei ringförmige Kautschukelemente (1,1), zwei ringförmige, verstärkende Elemente (2, 2) aus Textil und ein ringförmiger Verbund zwischen dem effektiven Durchmesser (3) ind dem Aussendurchmesser (9) der Enveloppe, gestaltet durch die inneren ringförmigen Gummielemente (1',1'), aufweist.

5. Verfahren zur Herstellung einer Enveloppe zur Runderneuerung von Reifenlaufflächen, dadurch gekennzeichnet,

daß ein wärmebeständiges, verstärkendes Textilgewebe von 10 bis 500 g/m$^2$ und einer Dehnung von maximal 500 % in jeweiliger Richtung, vorzugsweise ein elastisches Textilgewebe mit einer Dehnung von 50 bis 300 % in jeweiliger Richtung, dessen Breite dem Außendurchmesser der Enveloppe entspricht oder gering größer ist und kreisförmige Öffnungen, deren Durchmesser nicht kleiner als der innere Durchmesser der Enveloppe und nicht größer als die Differenz zwischen dem effektiven Durchmesser der Enveloppe und der halben Breite der Lauffläche des zu erneuernden Reifens sind, wobei diese Öffnungen längs der Zentrallinie des Textilgewebes in Abständen welche bis zu 200 mm größer als das Außendurchmesser der Enveloppe sind,verteilt sind,

- an einer oder beiden Seiten mit einer 0,1 bis 0,5 mm dicken und die gleiche Breite, wie das erwähnte Textilgewebe, aufweisenden Kautschukmischungsschicht, basierend auf einem wärmebeständigen Elastomer, bedeckt oder beschichtet wird;

- anschliessend der Aufbau - mit der Textilseite aufwärts, wenn das erwähnte verstärkende Textil nur auf einer Seite mit einer Kautschukschicht versehen ist,
  - gegebenenfalls mit Elementen, welche die ringförmigen Dichtungsflächen am Umfang der Enveloppe in der Form von Kautschukrundscheiben (5), mit der gleichen Zusammensetzung und Dicke, wie die Kautschukschicht, welche mit den oben erwähnten kreisförmigen Öffnungen im Textilgewebe konzentrisch sind und sie in einem ringförmigen Rand von mindestens 10 mm überlappen, gewährleisten und
  - ferner gegebenenfalls mit ringförmigen Elementen (4) für die Gestaltung des ringförmigen Verbundes am Umfang der Enveloppe, welche dieselbe Zusammensetzung und Dicke, wie die erwähnte Kautschukschicht aufweisen und konzentrisch mit den erwähnten kreisförmigen Öffnungen im Textilgewebe sind, während ihre Innendurchmesser identisch mit dem effektiven Durchmesser (3) der Enveloppe sind und ihre Außendurchmesser dem Außendurchmesser (9) der Enveloppe gleichen, überlagert wird;
  - dann im Abstand von minimal 5 mm vom effektiven Durchmesser (3) der Enveloppe in der inneren Richtung auf dem Textilgewebe eine Rundscheibe (8) mit einem Durchmesser von etwa 40 mm, bestehend aus einer Kautschukmischung von gleicher Zusammensetzung, wie die erwähnte Kautschukschicht, für die nachfolgende Bindung des Ventils mit der Enveloppe, angeordnet wird;

- und endlich der derart erhaltene Aufbau über die gesamte Kautschukfläche, mit Ausnahme der Ringfläche zwischen dem Effektiv- und Außendurchmesser der Enveloppe, mit den Rundscheiben (7) und gegebenenfalls (7') aus Trennfolie oder -textil, bedeckt wird, wonach über diesen Aufbau sein Spiegelbild-Aufbau, mit der Ausnahme von Trennrundscheiben (7,7'), Kautschukrundscheiben (8) und Kautschukringelemenen (4) gelegt wird und der Vulkanisierungsoperation unterworfen wird; anschliesend wird das Material in die erwünschten Dimensionen der Enveloppen geformt.

6. Verfahren gemäß Anspruch 5, dadurch gekennzeichnet, daß die Verfahrensschritte kontiniuerlich ausgeführt werden.

Fig. 1A

Fig. 2A

Fig. 3A

Fig. 1B

Fig. 2B

Fig. 3B